# DEMANDE DE BREVET EUROPEEN

(11) **EP 1 553 426 A1**
(43) Date de publication de la demande: **13.07.2005**
(21) Numéro de dépôt: 04000261.0
(22) Date de dépôt: 08.01.2004
(51) Int. Cl.: G01S 5/14, G01S 1/02, G01S 1/04, H04L 25/49, H04B 1/69

(54) **Procédé et dispositif récepteur pour communication de données sans fil par des signaux codés temporellement et à ultra-large bande**

(71) Demandeur: Institut de Microtechnique de l'Université de Neuchâtel, 2000 Neuchâtel (CH)
(72) Inventeur: Botteron, Cyril, 2052 Fontainemelon (CH); Merz, Roman, 9536 Schwarzenbach (CH); Farine, Pierre-André, 2000 Neuchâtel (CH)
(74) Mandataire: Ravenel, Thierry Gérard Louis

(57) **Abrégé**

Dans le procédé de communication de données sans fil, un dispositif émetteur (2) ayant une première antenne à large bande (27) transmet des signaux codés de données à ultra-large bande à un dispositif récepteur (3) ayant une seconde antenne à large bande (37) pour la réception des signaux codés de données à trajets direct et/ou multiples. Les données transmises sont définies par une ou plusieurs séquences de N impulsions où N est un nombre entier supérieur à 1. L'agencement des N impulsions de chaque séquence représente un codage des données relatif au dispositif émetteur. Les N impulsions d'une séquence d'impulsions des signaux codés de données à trajets direct et/ou multiples reçus par le dispositif récepteur sont traitées chacune dans une parmi N fenêtres temporelles correspondantes de réception. Chacune des N fenêtres temporelles de réception est positionnée dans le temps en fonction d'un agencement théorique connu des N impulsions des signaux transmis par le dispositif émetteur. Une opération d'addition des N fenêtres est réalisée par la suite dans le dispositif récepteur pour que le niveau d'amplitude des impulsions additionnées de manière cohérente soit supérieur au niveau d'amplitude du bruit capté par le dispositif récepteur (3).

## Description

La présente invention concerne un procédé de communication de données sans fil entre un dispositif émetteur et un dispositif récepteur. Le dispositif émetteur transmet des signaux codés de données à ultra-large bande (UWB pour Ultra-wideband en terminologie anglaise) par une première antenne à large bande, et le dispositif récepteur reçoit par une seconde antenne à large bande des signaux codés de données à trajets direct et/ou multiples provenant du dispositif émetteur. Les données transmises sont définies par une ou plusieurs séquences successives de N impulsions où N est un nombre entier supérieur à 1. L'agencement des N impulsions de chaque séquence représente un codage des données relatif au dispositif émetteur, c'est-à-dire personnalisant le dispositif émetteur.

L'invention concerne également le dispositif récepteur pour la mise en oeuvre du procédé.

Dans la présente description, on entendra par "données" une information textuelle, qui comprend un ou plusieurs symboles où caractères, une information audiovisuelle, une information de synchronisation ou une information de positionnement ou d'autres informations. Les données transmises dans les signaux de données sont définies par une ou plusieurs séquences d'impulsions très courtes dont le codage peut être défini par l'écart temporel entre chaque impulsion.

La transmission de données par une technologie à ultra-large bande est réalisée à l'aide de signaux de données qui comprennent une série d'impulsions très courtes sans l'utilisation d'une fréquence porteuse. La largeur de ces impulsions peut être inférieure à 1 ns. Comme les impulsions des signaux de données sont très courtes dans le domaine temporel, par transformation dans le domaine fréquentiel, cela conduit à l'obtention d'un spectre à ultra-large bande, ce qui définit la technologie UWB. Le spectre de fréquences peut aller de 500 MHz à plusieurs GHz. La largeur de bande de fréquence par rapport à la fréquence centrale est généralement supérieure à 25% pour une technologie à ultra-large bande.

La transmission de données par la technologie à ultra-large bande se fait normalement à courte distance avec une faible puissance des impulsions transmises. Ceci est dû généralement au fait du partage éventuel du spectre de fréquences avec des dispositifs de transmission à bande étroite. Cela signifie qu'une unique impulsion est généralement reçue avec un niveau de puissance plus faible que le niveau du bruit. Ainsi, il est souvent nécessaire d'utiliser plus d'une impulsion d'énergie pour transmettre un unique symbole ou caractère afin qu'il soit reconnu par le dispositif récepteur.

Pour la transmission des signaux codés de données qui comprennent une ou plusieurs séquences successives de N très courtes impulsions, les impulsions peuvent être de différentes formes pour autant que leur largeur soit généralement inférieure à 1 ns. Il peut s'agir par exemple d'impulsions de forme gaussienne à une ou deux polarités ou alternances.

Comme plusieurs dispositifs émetteur et récepteur à ultra-large bande (UWB) peuvent se trouver à proximité dans un même espace pour la transmission de signaux de données, le codage des séquences des signaux de données transmises est en principe personnalisé au dispositif émetteur. De cette manière, le dispositif récepteur peut reconnaître les signaux codés provenant d'un dispositif émetteur particulier. En addition, tous les codes utilisés pour le codage des données sont en principe orthogonaux, ce qui signifie qu'en les corrélant l'un avec l'autre le résultat de la corrélation donne une valeur proche de 0.

Habituellement, les données transmises dans des signaux à séquences d'impulsions peuvent être codées par exemple par une modulation temporelle dénommée de position d'impulsions (PPM, Pulse Position Modulation en terminologie anglaise). L'espace temporel entre chaque impulsion, et l'instant d'apparition de la première impulsion de chaque séquence peut donc définir le codage souhaité pour la communication des données. Pour ce faire, les impulsions de chaque séquence sont émises à une fréquence de répétition (PRF, Pulse Repetition Frequency en terminologie anglaise) qui peut être supérieure par exemple à 10 MHz. Chacune des impulsions est donc transmise dans une fenêtre de répétition ayant une longueur déterminée qui peut être par exemple de 20 ns ou supérieure. En fonction d'un codage temporel souhaité, l'impulsion peut être en avance ou en retard par rapport à une position théorique d'émission déterminée afin de pouvoir coder par exemple un "0" ou un "1".

Lorsqu'une transmission de signaux codés à séquences d'impulsions est effectuée comme indiqué ci-devant, il est nécessaire qu'au niveau de la réception de ces signaux dans le dispositif récepteur, les impulsions puissent être détectées en fonction de leur position suite à une modulation du type PPM. Ceci exige généralement une très grande cohérence de temporisation dans les dispositifs émetteur et récepteur pour la détection des données transmises.

Les signaux codés de données, qui sont transmis par le dispositif émetteur, peuvent être réfléchis ou réfractés par différents obstacles avant d'être captés par le dispositif récepteur. De ce fait, plusieurs signaux codés décalés dans le temps, c'est-à-dire les signaux à trajets direct et/ou multiples, qui comprennent des données identiques, peuvent être captés par le dispositif récepteur.

Plusieurs techniques pour la démodulation de l'information contenue dans des signaux codés de données reçus par un dispositif récepteur traditionnel ont déjà été proposées par le passé. Une de ces techniques connues consiste à corréler les signaux codés de données captés et mis en forme dans le dispositif récepteur avec une réplique en avance et une réplique en retard de signaux de référence. Les signaux corrélés en avance de phase et en retard de phase sont par la suite intégrés, et un ajustement du code de chaque réplique est effectué dans une boucle d'asservissement du code jusqu'à ce que le niveau des signaux intégrés en avance de phase et en retard de phase soit identique. Toutefois, si tous les signaux à trajets . multiples doivent être détectés, plusieurs étages de corrélation sont utilisés pour travailler en parallèle. De ce fait, la consommation électrique du dispositif récepteur est importante, et beaucoup de composants électroniques sont nécessaires pour le traitement des signaux dans le dispositif récepteur, ce qui constitue un inconvénient majeur.

L'invention a donc pour but principal de pallier les inconvénients de l'art antérieur en fournissant un procédé de communication de données sans fil par des signaux codés de données à ultra-large bande qui soit à même de traiter simplement tous les signaux codés à trajets direct et/ou multiples captés par le dispositif récepteur.

Un autre but de l'invention est de fournir un procédé de communication de données sans fil par des signaux codés de données à ultra-large bande permettant de maximiser l'amplitude des impulsions de données par rapport au bruit capté par le dispositif récepteur.

A cet effet, l'invention concerne un procédé cité ci-devant qui se caractérise en ce que les N impulsions d'une séquence d'impulsions des signaux codés de données à trajets direct et/ou multiples reçus par le dispositif récepteur sont traitées chacune dans une parmi N fenêtres temporelles correspondantes de réception, chacune des N fenêtres temporelles de réception étant positionnée dans le temps en fonction d'un agencement théorique connu des N impulsions des signaux transmis par le dispositif émetteur, et en ce qu'une opération d'addition des N fenêtres est réalisée dans le dispositif récepteur pour que le niveau d'amplitude des impulsions additionnées soit supérieur au niveau d'amplitude du bruit capté par le dispositif récepteur.

Un avantage du procédé de communication selon l'invention est que la majeure partie des impulsions des signaux à trajets direct et/ou multiples reçus de chaque fenêtre temporelle peuvent être additionnées de manière cohérente, car chacune des N fenêtres temporelles de réception est positionnée dans le temps selon un emplacement connu des N impulsions des signaux codés de données transmis par le dispositif émetteur. Même si les signaux à trajet direct ne peuvent pas être captés par le dispositif récepteur en fonction d'un obstacle sur le chemin des signaux, il est possible de réaliser une addition cohérente des impulsions de chaque fenêtre correspondante provenant des signaux codés à trajets multiples.

Chaque fenêtre peut être choisie avec une largeur suffisante pour capter chacune des N impulsions de tous les signaux captés par le dispositif récepteur. Cette largeur, qui est la même pour toutes les fenêtres temporelles, peut être ajustée en fonction des caractéristiques de propagation du canal de transmission, et durant la phase de recherche en temps et en fréquence pour l'acquisition des données des signaux reçus. La largeur de chaque fenêtre peut être par exemple de 20 ou 50 ns, et chaque fenêtre est en principe centrée sur une position théorique de référence relative aux impulsions des signaux à trajet direct.

L'emplacement du début de chaque fenêtre correspond à l'emplacement des impulsions d'une séquence des signaux codés de données pour réaliser une addition cohérente des impulsions de chaque fenêtre. Avec cette addition cohérente des impulsions des fenêtres temporelles, le niveau d'amplitude des impulsions additionnées devient supérieur au niveau du bruit si le dispositif récepteur est bien synchronisé en temps et en fréquence par rapport au dispositif émetteur. Après cette étape d'addition des fenêtres temporelles, une démodulation des données peut être effectuée dans une unité de traitement des signaux du dispositif récepteur.

L'addition des fenêtres peut être réalisée analogiquement avant une conversion analogique-numérique des signaux de données, ou numériquement après la conversion analogique-numérique. Afin de réduire la consommation électrique du dispositif récepteur, l'échantillonnage des signaux dans un étage de conversion analogique-numérique peut être effectué uniquement pendant des intervalles de temps identiques à la durée des fenêtres temporelles.

Grâce à l'addition des fenêtres temporelles, le niveau d'amplitude des signaux de bruit captés par le dispositif récepteur diminue fortement, par rapport au niveau des impulsions additionnées. Ceci est dû au fait que la polarité en tension des signaux de bruit dans l'intervalle temporel de chaque fenêtre n'est pas définie précisément, au contraire de la polarité en tension des impulsions des signaux de données.

De préférence, les données sont codées par une modulation temporelle des impulsions de chaque séquence comme indiqué ci-devant. Cependant, il peut être envisagé également de coder les données par une modulation de polarité ou de phase des impulsions ou par une combinaison de modulation temporelle et de polarité ou de phase des impulsions. Dans le cas d'une modulation de polarité des impulsions, chaque fenêtre qui comprend une ou plusieurs impulsions, est multipliée par -1 pour des impulsions de polarité négative et par +1 pour des impulsions de polarité positive de manière à pouvoir par la suite additionner les impulsions de toutes les fenêtres de manière cohérente.

Un autre avantage du procédé de communication selon l'invention est qu'un ajustement de la fréquence des signaux d'horloge ou d'échantillonnage du dispositif récepteur peut être effectué grâce au résultat de l'addition des fenêtres temporelles. La fréquence des signaux d'horloge ou d'échantillonnage est ajustée à la fréquence des signaux d'horloge du dispositif émetteur par une unité de traitement des signaux du dispositif récepteur. Cet ajustement de la fréquence peut être fait à tout moment quand on remarque par exemple une modification d'emplacement des impulsions additionnées dans une fenêtre temporelle finale ou que le niveau d'amplitude des impulsions additionnées diminue.

Pour opérer cet ajustement, les signaux de données transmis par le dispositif émetteur peuvent comprendre une trame de synchronisation. Cette trame de synchronisation comprend plusieurs séquences successives de N impulsions personnalisées au dispositif émetteur. Ainsi, comme l'emplacement des impulsions de chacune des séquences est connue par le dispositif récepteur, il peut effectuer une recherche à deux dimensions en temps et en fréquence afin de trouver le début de la transmission ainsi que l'écart de fréquence.

Grâce au procédé de communication selon l'invention, il est possible de choisir et poursuivre la fréquence d'échantillonnage ou des signaux d'horloge afin de maximiser le pic d'amplitude des impulsions additionnées que ce soit des impulsions de signaux à trajets direct ou multiples.

Un autre avantage du procédé de communication selon l'invention est qu'il peut être utilisé dans un but de positionnement. Pour ce faire, il est en général prévu qu'au moins deux dispositifs émetteurs, voire trois dispositifs émetteurs transmettent des signaux codés de données. Ceci permet au dispositif récepteur de pouvoir calculer des coordonnées de positionnement en fonction du calcul du temps d'arrivée des premiers signaux codés comme décrit ci-après. Pour une opération de positionnement, le nombre N d'impulsions par séquence de données transmises peut être par exemple égal à 1024 avec une largeur d'impulsion se situant par exemple à 0.5 ns.

Un autre avantage du procédé de communication selon l'invention est que le niveau du bruit capté peut être estimé dans l'unité de traitement des signaux du dispositif récepteur. Pour ce faire, plusieurs amplitudes maximales en valeur absolue des signaux d'une ou plusieurs sous-fenêtres temporelles décalées par intervalles de temps spécifié du début de la fenêtre temporelle à la fin de ladite fenêtre temporelle sont calculées successivement ou en parallèle dans l'unité de traitement des signaux du dispositif récepteur. Cette estimation peut être réalisée avant ou après l'opération d'addition des fenêtres temporelles.

Un autre avantage du procédé de communication selon l'invention est qu'il permet de calculer le temps d'arrivée des premiers signaux codés de données à trajet direct et/ou multiples. Dans le cas où les signaux à trajet direct ne sont pas captés par le dispositif récepteur, les premiers signaux à trajets multiples sont traités. Cette opération d'estimation du temps d'arrivée consiste à calculer tout d'abord une enveloppe positive des signaux de chaque fenêtre temporelle ou de la fenêtre temporelle finale. Par la suite, une détermination des points minimum et maximum de l'enveloppe est effectuée et un point central est calculé à partir duquel une fonction qui peut être tangente ou affine permet d'estimer le flanc montant de l'enveloppe.

L'invention concerne également un dispositif récepteur pour la mise en oeuvre du procédé de communication de données sans fil dans lequel les impulsions de tous les signaux codés à trajets direct et/ou multiples captés peuvent être traitées simplement.

A cet effet, le dispositif récepteur pour la mise en oeuvre du procédé de communication, qui comprend un second étage oscillateur délivrant au moins un second signal d'horloge à une seconde fréquence définie, une seconde unité de traitement des signaux reliée au second étage oscillateur, et un étage de conversion analogique-numérique des signaux codés de données reçus par la seconde antenne à large bande, se caractérise en ce que l'unité de traitement des signaux comprend des moyens d'addition de fenêtres temporelles pour réaliser une addition cohérente des impulsions de chacune des N fenêtres temporelles.

Les buts, avantages et caractéristiques du procédé de communication de données sans fil par des signaux codés de données à ultra-large bande, et du dispositif récepteur pour sa mise en oeuvre apparaîtront mieux dans la description suivante de formes d'exécution de l'invention en liaison avec les dessins dans lesquels :
- la figure 1a représente de manière schématique un système de communication de données pour la mise en oeuvre du procédé de communication selon l'invention, dans lequel une addition des fenêtres temporelles dans un dispositif récepteur est réalisée numériquement,
- la figure 1b représente de manière schématique un système de communication de données pour la mise en oeuvre du procédé de communication selon l'invention, dans lequel une addition des fenêtres temporelles dans un dispositif récepteur est réalisée analogiquement,
- la figure 2 représente schématiquement la manière d'additionner des signaux des N fenêtres temporelles dans un dispositif récepteur pour le procédé de communication selon l'invention,
- les figures 3a à 3d représentent des graphiques montrant une modulation temporelle de codage des données, une modulation de polarité de codage des données, une modulation temporelle et de polarité de codage des données, et une modulation en amplitude de codage des données transmises du procédé de communication selon l'invention,
- la figure 4 représente de manière simplifiée des signaux codés de données débutant par une trame de synchronisation pour le procédé de communication selon l'invention,
- la figure 5 représente des graphiques de signaux dans le dispositif émetteur et dans le dispositif récepteur dans le cas d'une synchronisation en temps et en fréquence des signaux d'horloge des deux dispositifs, d'un écart en fréquence des signaux d'horloge et d'une non synchronisation temporelle des fenêtres du procédé de communication selon l'invention,
- les figures 6a et 6b représentent une forme d'exécution d'un étage de conversion analogique-numérique du dispositif récepteur, et des signaux de cadencement de l'étage de conversion pour la mise en oeuvre du procédé de communication selon l'invention,
- la figure 7 représente un graphique des signaux d'une fenêtre temporelle du dispositif récepteur des étapes d'estimation du niveau du bruit capté du procédé de communication selon l'invention,
- la figure 8 représente un graphique d'une partie d'une fenêtre temporelle du dispositif récepteur des étapes du calcul de l'enveloppe positive des signaux de la fenêtre temporelle du procédé de communication selon l'invention, et
- la figure 9 représente un graphique d'une partie d'une fenêtre temporelle du dispositif récepteur des étapes du calcul du temps d'arrivée des premiers signaux codés de données à trajets direct ou multiples du procédé de communication selon l'invention.

Dans la description suivante, tous les éléments du système de communication de données sans fil par des signaux codés de données à ultra-large bande utilisés pour la mise en oeuvre du procédé de communication, qui sont bien connus d'un homme du métier dans ce domaine technique, ne seront pas expliqués en détail.

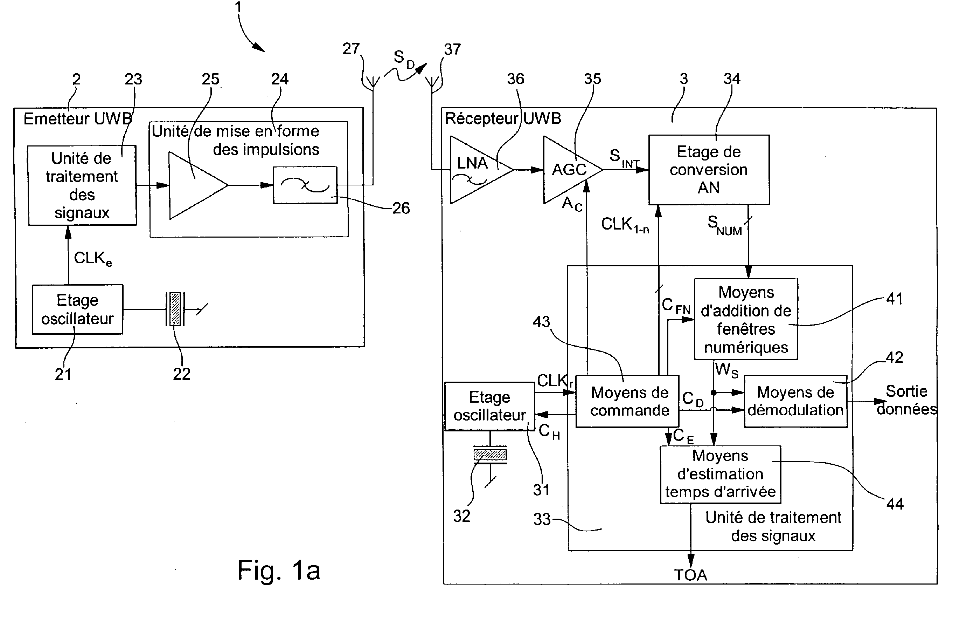

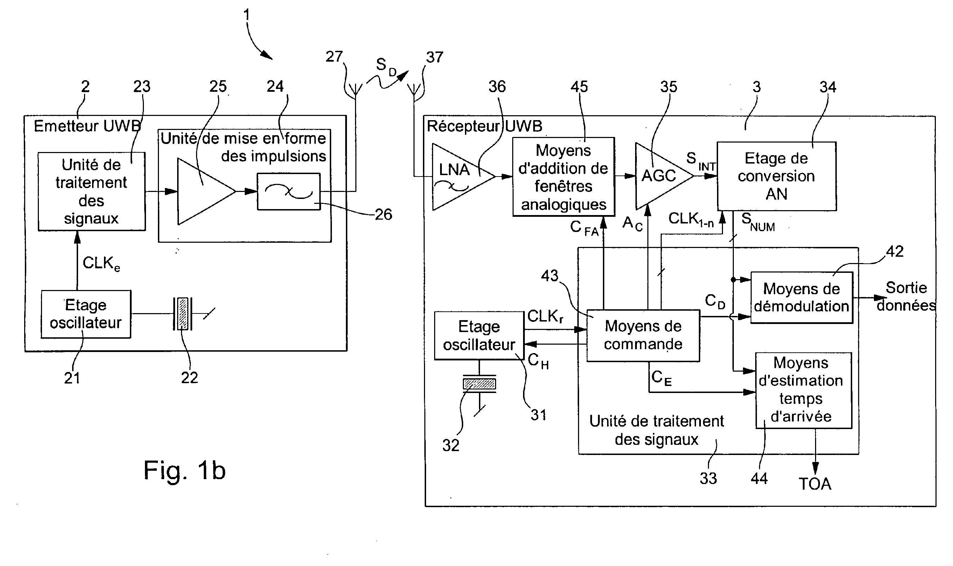

Aux figures 1a et 1b, il est représenté schématiquement un système de communication 1 pour la mise en oeuvre du procédé de communication de données sans fil par des signaux codés de données S_{D} à ultra-large bande. Le système de communication 1 comprend au moins un dispositif émetteur 2 qui transmet des signaux codés de données S_{D} par une première antenne à large bande 27 et un dispositif récepteur 3 qui reçoit des signaux codés de données à trajets direct et/ou multiples par une seconde antenne à large bande 37.

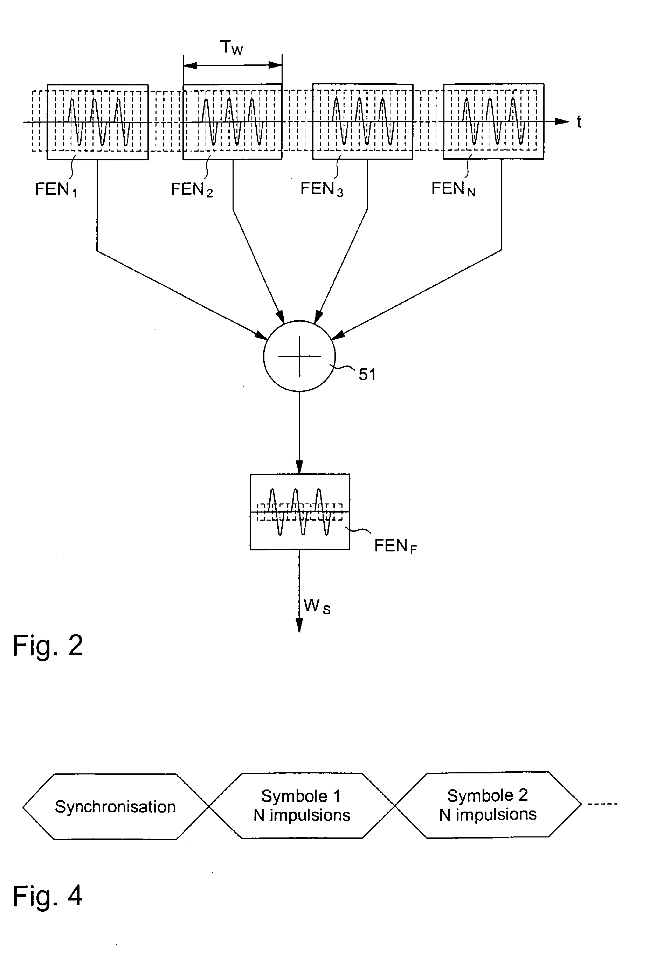

Comme expliqué ci-après notamment en référence à la figure 2, les impulsions à trajets direct et/ou multiples reçues par le dispositif récepteur 3 et correspondant à la transmission d'une des N impulsions des signaux codés de données sont traitées ou sélectionnées dans une parmi N fenêtres temporelles correspondantes dans le dispositif récepteur 3. Comme chaque fenêtre temporelle est positionnée chronologiquement en fonction de la position connue de chaque impulsion des signaux codés de données S_{D} transmis, une addition des fenêtres temporelles est effectuée pour additionner de manière cohérente les impulsions de chaque fenêtre.

De manière générale, le dispositif émetteur 2 comprend un étage oscillateur 21 pour fournir un signal d'horloge CLKₑ, dont la fréquence dépend d'un résonateur à quartz 22, une unité de traitement des signaux 23 cadencée par le signal d'horloge, et une unité de mise en forme des impulsions 24 reliée à l'unité de traitement des signaux 23. Etant donné l'emploi d'un étage oscillateur 21 à quartz 22, la fréquence des signaux d'horloge CLKₑ peut être de préférence multipliée M fois dans l'unité de traitement des signaux 23. Cette multiplication par M de la fréquence des signaux d'horloge CLKₑ est obtenue conventionnellement à l'aide de portes à délai non représentées, et une combinaison des impulsions de cadencement en sortie de ces portes à délai.

Dans l'unité de traitement des signaux 23, la fréquence utile pour la génération d'impulsions de données doit normalement être supérieure ou égale à 1 GHz. Ceci nécessite l'emploi d'au moins 4 portes à délai décalées d'un quart de période par rapport à une période du signal d'horloge CLKₑ à fréquence de l'ordre de 250 MHz.

Pour la transmission de signaux codés de données à ultra-large bande (UWB), l'unité de traitement 23 du dispositif émetteur 2 doit fournir, à l'unité de mise en forme des impulsions 24, une ou plusieurs séquences de N impulsions successives en tension ou en courant de polarité positive ou négative. Chaque impulsion des séquences est produite dans un intervalle temporel correspondant à l'inverse d'une fréquence de répétition. Pour des signaux de données à ultra-large bande, cette fréquence de répétition PRF (Pulse Repetition Frequency en terminologie anglaise) peut être supérieure ou égale à 10 MHz.

La manière de coder les données par des séquences de N impulsions dans l'unité de traitement des signaux 23 du dispositif émetteur 2 doit permettre d'une part de différencier chaque symbole ou caractère à transmettre et d'autre part de personnaliser le dispositif émetteur. Un dispositif récepteur 3 voisin peut ainsi reconnaître la provenance des signaux de données reçus, car les différents codes utilisés pour personnaliser des dispositifs émetteurs sont orthogonaux.

L'unité de mise en forme des impulsions 24 reçoit les données sous forme d'une ou plusieurs séquences de N impulsions à transmettre par la première antenne à large bande 27 de l'unité de traitement des signaux 23. Ces impulsions de données codées dans l'unité de traitement 23 sont amplifiées dans un amplificateur 25 de l'unité de mise en forme des impulsions 24, et filtrées dans un filtre passe-bande 26 traditionnel avant d'être transmises par la première antenne à large bande 27. Généralement, la forme des impulsions d'énergie des signaux de données S_{D} transmis par la première antenne à large bande 27 est obtenue par dérivation des impulsions mises en forme, due à une commutation de courant d'antenne. Les impulsions transmises peuvent être de forme gaussienne à une ou deux alternances, ou d'une autre forme.

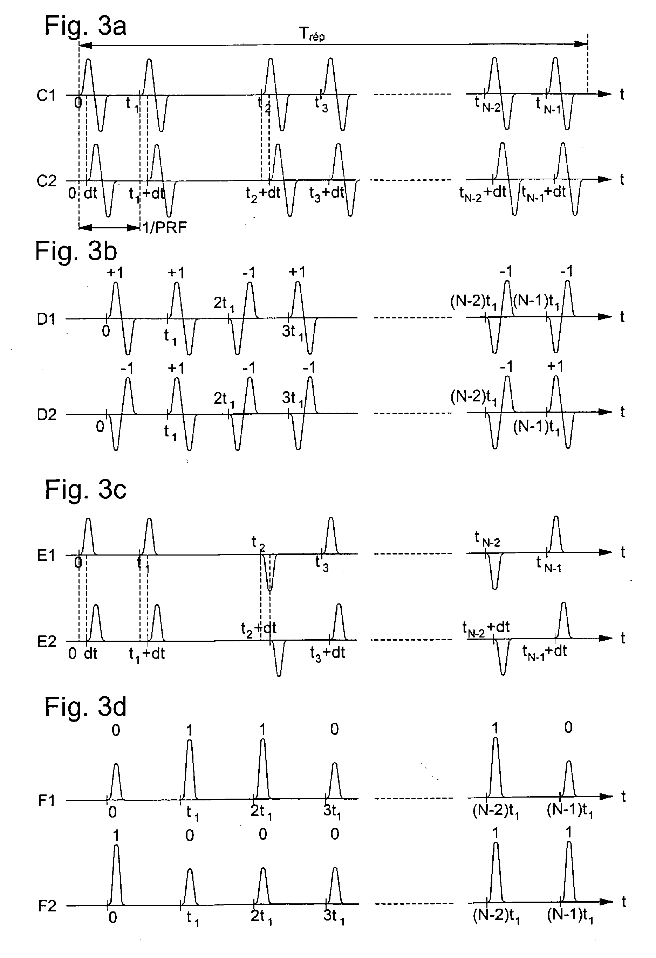

La manière de coder des données, telles qu'un ou plusieurs caractères ou symboles, par une ou plusieurs séquences de N impulsions dans les signaux de données à transmettre est présentée aux figures 3a à 3d.

Les données peuvent être codées par une modulation temporelle des impulsions de chaque séquence, comme montré à la figure 3a. Cette modulation est dénommée PPM (Pulse Position Modulation en terminologie anglaise). La forme des impulsions présentée est de forme gaussienne à deux alternances. Bien entendu, cette forme des impulsions peut être également de forme gaussienne à une alternance positive ou négative, ou de diverses autres formes.

Dans cette figure 3a, chaque caractère C1 et C2 est défini par N impulsions, dont chaque impulsion est de durée inférieure à 1 ns, dans une période de répétition de séquence T_{rép}. Chaque impulsion est produite par intervalle temporel 1/PRF correspondant à l'inverse de la fréquence de répétition PRF comme décrit ci-devant. La position temporelle de chaque impulsion dans l'intervalle temporel est spécifique au caractère à coder. De plus, l'écart entre chaque impulsion de la séquence de N impulsions est de préférence pseudo-aléatoire pour personnaliser le dispositif émetteur. Avec cet agencement des N impulsions par période de répétition de séquence T_{rép}, le caractère ou symbole C2 se différencie du caractère ou symbole C1 uniquement par une différence temporelle dt de chacune des N impulsions produites. Bien entendu pour d'autres caractères ou symboles à transmettre, la différence temporelle dt est chaque fois différente.

Le temps de répétition de séquence T_{rép} peut être par exemple de 0.1 ms avec 1024 impulsions par séquence, ou 10 µs avec 256 impulsions par séquence.

Les données peuvent également être codées par modulation de polarité ou de phase des impulsions produites par l'unité de traitement des signaux du dispositif émetteur comme montré à la figure 3b.

Dans cette figure 3b, on remarque que l'écart temporel identique entre chaque impulsion est égal à une valeur de période de répétition 1/PRF. Par contre, la polarité des impulsions, notamment leur phase, est une caractéristique du codage personnalisant le dispositif émetteur, ainsi que du caractère ou symbole D1 ou D2 à transmettre dans les signaux de données.

La polarité positive ou phase nulle des impulsions à double alternance peut définir un état +1, alors qu'une polarité négative ou phase à 180° des impulsions à double alternance peut définir un état -1. Comme la forme des impulsions présentées à la figure 3b est une forme gaussienne à deux alternances, la différence entre un état +1 et un état -1 se remarque par un déphasage de 180° de l'impulsion. Toutefois, il aurait tout à fait pu être imaginé une forme gaussienne à une alternance positive pour définir un état +1 d'une impulsion, ou à une alternance négative pour définir un état -1 d'une impulsion.

A la figure 3c, les données sont codées par combinaison d'une modulation temporelle et de polarité des impulsions. Les N impulsions d'une séquence pour définir le caractère ou symbole E1 ou E2 sont présentées à simple alternance. Chaque impulsion peut être de polarité positive ou négative. Toutefois, le caractère ou symbole E2 se différencie du caractère ou symbole E1 par un écart temporel dt de chaque impulsion produite. Il est à noter que la polarité de chaque impulsion à une alternance de chaque caractère pourrait également être différente.

Finalement à la figure 3d, il est représenté un codage des données par modulation d'amplitude des impulsions à simple alternance positive. L'amplitude d'une impulsion en dessous d'un seuil déterminé d'amplitude définit un 0, alors que l'amplitude d'une impulsion en dessus du seuil déterminé définit un 1. Dans le cas de la modulation en amplitude des impulsions, l'écart temporel identique entre chaque impulsion est égal à une valeur de période de répétition 1/PRF. Le caractère ou symbole F1 se différencie du caractère ou symbole F2 par une séquence de N impulsions à amplitude différente.

Il est à noter que la modulation en amplitude des impulsions n'est pas une méthode robuste. De plus, elle est difficile à mettre en oeuvre dans une technologie UWB, ce qui fait que préférentiellement, les données sont codées selon une des modulations présentées dans les figures 3a à 3c, ou une combinaison de ces modulations.

Pour la réception de signaux codés de données à trajets direct et/ou multiples S_{D}, le dispositif récepteur 3 comprend tout d'abord une seconde antenne à large bande 37. Cette antenne 37 fournit des signaux, qui sont dérivés sur la base des signaux codés de données captés, à un amplificateur à faible bruit 36, muni d'un filtre passe-bande, dénommé LNA (Low Noise Amplifier en terminologie anglaise). A la suite de cet amplificateur LNA 36, il peut être prévu un amplificateur 35 à commande du gain automatique AGC (Automatic Gain Control en terminologie anglaise), dont le facteur d'amplification A_{c} est commandé par des moyens de commande 43 d'une unité de traitement des signaux 33. L'amplificateur 35 fournit des signaux amplifiés intermédiaires S_{INT} à un étage de conversion analogique-numérique 34 chargé de convertir numériquement les signaux analogiques.

Le dispositif récepteur 3 comprend encore un étage oscillateur 31 pour fournir un signal d'horloge CLKᵣ, dont la fréquence dépend d'un résonateur à quartz 32, et une unité de traitement des signaux 33 cadencée par le signal d'horloge CLKᵣ. Les signaux d'horloge CLKᵣ sont fournis notamment aux moyens de commande 43 de l'unité de traitement des signaux.

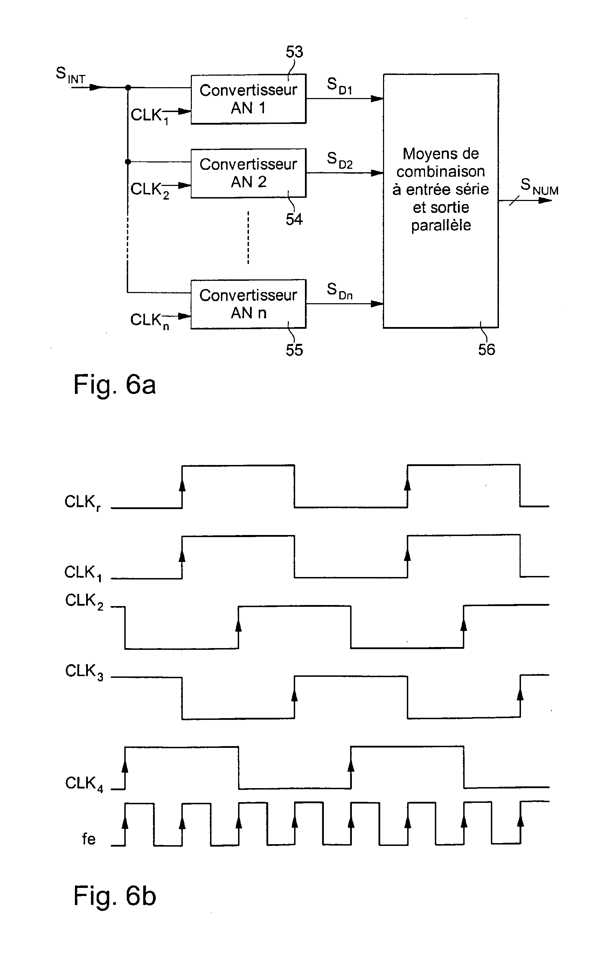

Etant donné l'emploi d'un étage oscillateur 31 à quartz 32, les moyens de commande 43 sont chargés de multiplier la fréquence d'horloge CLKᵣ par un facteur n comme pour le dispositif émetteur décrit ci-devant. Sur la base des signaux d'horloge CLKᵣ, les moyens de commande 43 fournissent notamment des signaux de cadencement CLK ₁₋ₙ à l'étage de conversion analogique-numérique 34 pour des opérations d'échantillonnage. Cet étage de conversion 34 sera décrit ci-dessous en référence aux figures 6a et 6b.

Il est à noter que pour réduire la consommation électrique du dispositif récepteur, il peut être envisagé de n'effectuer l'échantillonnage des signaux intermédiaires uniquement pendant des périodes identiques à la largeur temporelle de chaque fenêtre.

Selon une première forme d'exécution du dispositif récepteur 3 de la figure 1a, l'unité de traitement des signaux 33 comprend en plus des moyens de commande 43, des moyens d'addition de fenêtres numériques 41 pour recevoir des signaux échantillonnés S_{NUM} de l'étage de conversion analogique-numérique 34, des moyens de démodulation de données 42 et des moyens d'estimation du temps d'arrivée 44. Les moyens 42 et 44 sont tous les deux connectés en sortie des moyens d'addition de fenêtres numériques 41 pour recevoir des signaux d'une fenêtre finale d'addition Wₛ.

Pour la commande des opérations de l'unité de traitement des signaux 33, les moyens de commande 43 fournissent tout d'abord des signaux de commande C_{FN} aux moyens d'addition de fenêtres numériques 41. Ces signaux de commande C_{FN} permettent d'ajuster la temporisation des fenêtres temporelles de sélection des parties des signaux numériques, c'est-à-dire le placement de la première des N fenêtres dans le temps.

Pour un agencement des fenêtres temporelles, il doit donc être opéré une recherche à deux dimensions en temps et en fréquence. Cette recherche permet d'obtenir une bonne synchronisation et une fréquence d'horloge de l'étage oscillateur 31 adaptée proportionnellement à la fréquence d'horloge de l'étage oscillateur 21 qui est à la base de la génération des impulsions des signaux codés de données transmis. Ainsi, les moyens de commande 43 peuvent ajuster directement la fréquence des signaux d'horloge CLKᵣ par des signaux de commande C_{H}. Ces signaux de commande C_{H} peuvent permettre d'adapter une valeur résistive ou capacitive d'un réseau de résistances ou de condensateurs bien connus de l'étage oscillateur 31.

Une autre méthode pour la recherche en fréquence consiste à utiliser les signaux de commande C_{FN} pour modifier l'échelle de temps ou de fréquence de répétition des N fenêtres à additionner des moyens d'addition de fenêtres numériques 41. Ceci correspond à effectuer une opération de ré-échantillonnage dans l'unité de traitement de signaux 33 du dispositif récepteur 3 avec une fréquence de ré-échantillonnage différente de la fréquence d'échantillonnage de l'étage de conversion analogique-numérique AN 34. Cette fréquence de ré-échantillonnage générée par les moyens de commande 43 peut être bien plus élevée de manière à augmenter la précision notamment pour le positionnement.

Une fois que l'opération d'addition des fenêtres est réalisée dans les moyens d'addition de fenêtres numériques 41, les moyens de commande fournissent des signaux de commande C_{D} aux moyens de démodulation de données 42. Ces moyens de démodulation de données sont susceptibles de fournir des données uniquement dans le cas où les N impulsions d'une séquence des fenêtres temporelles ont pu être additionnées de manière cohérente.

Pour reconnaître le ou les caractères ou symboles transmis dans les signaux codés de données, les signaux Wₛ de la fenêtre finale doivent présenter aux moyens de démodulation 42 une ou plusieurs impulsions dont l'amplitude est supérieure à un seuil déterminé et au niveau du bruit capté par le dispositif récepteur 3. De cette manière, il est possible de déterminer le ou les caractères ou symboles notamment par la position des impulsions dans la fenêtre finale pour une modulation du type PPM.

Il est à noter que l'impulsion à amplitude maximale de la fenêtre finale n'est pas nécessairement due aux N impulsions additionnées des signaux à trajet direct, car il se peut que des obstacles sur le chemin des signaux codés de données, atténue l'amplitude de chaque impulsion des signaux à trajet direct ou empêche la réception de ces signaux. Cependant comme les N impulsions de tous les signaux codés de données à trajets direct et multiples peuvent être traitées chacune dans une parmi N fenêtres temporelles de largeur adaptée, il est possible de fournir des signaux Wₛ de la fenêtre finale aux moyens de démodulation 42 dans laquelle au moins une impulsion maximale résulte de signaux à trajets multiples.

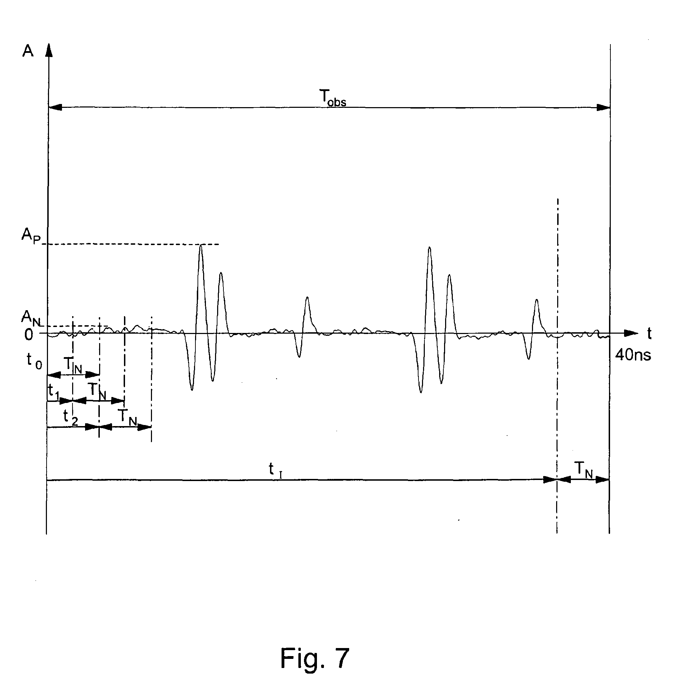

Pour une estimation du niveau du bruit et du temps d'arrivée des impulsions des premiers signaux codés de données à trajets direct ou multiples, les moyens de commande 43 fournissent des signaux de commande C_{E} aux moyens d'estimation du temps d'arrivée 44 pour qu'une information du temps d'arrivée TOA soit fournie. Ces moyens d'estimation du temps d'arrivée sont expliqués ci-après en référence aux figures 7 à 9.

Selon une deuxième forme d'exécution du dispositif récepteur présentée à la figure 1 b, la différence essentielle par rapport à la première forme d'exécution de la figure 1 a est que l'addition des fenêtres se fait dans des moyens d'addition de fenêtres analogiques 45. Ces moyens 45 peuvent être en dehors de l'unité de traitement des signaux 33 ou être incorporés dans ladite unité 33. Ces moyens d'addition de fenêtres analogiques 45 peuvent être intercalés entre l'amplificateur 36 et l'amplificateur 35. Toutefois, ces moyens 45 peuvent aussi être placés après l'amplificateur 35 et avant l'étage de conversion analogique-numérique 34.

Conventionnellement pour réaliser une addition de toutes les fenêtres temporelles analogiquement, il est utilisé plusieurs portes à retard en nombre N-1 non représentées dont la durée est ajustée à la position de chacune des N fenêtres souhaitées. Les signaux codés de données reçus par l'antenne 37 passent à travers chacune de ces portes de manière à pouvoir additionner en bon synchronisme pendant une durée équivalente à la largeur de chaque fenêtre, les signaux en sortie de chaque porte à retard avec les signaux à l'entrée de la première de ces portes. Les signaux résultant de cette addition sont ensuite amplifiés par l'amplificateur 35 et échantillonnés par l'étage de conversion 34.

L'étage de conversion analogique-numérique 34 fournit des signaux numériques S_{NUM} correspondant à l'échantillonnage des signaux provenant de la fenêtre finale d'addition des moyens d'addition de fenêtres analogiques 45. Ces signaux numériques S_{NUM} sont traités directement par les moyens de démodulation 42 et les moyens d'estimation du temps d'arrivée 44.

La figure 2 présente l'opération d'addition des fenêtres temporelles qui est une caractéristique principale du procédé de communication de données que ce soit une addition de signaux analogiques ou numériques.

Les signaux codés de données, qui sont captés par la seconde antenne du dispositif récepteur, comprennent du bruit en plus des impulsions de chaque séquence définissant les données à démoduler. Ce bruit sur la figure 2 est représenté par des traits interrompus pour bien le distinguer des impulsions des signaux codés de données. On peut voir que dans chaque fenêtre FEN₁ à FEN_{N}, des impulsions de signaux à trajets direct et multiples sont captés par le dispositif récepteur, mais avec un niveau d'amplitude plus faible que le niveau du bruit.

Les N fenêtres, dans lesquelles sont présentes les impulsions de tous les signaux codés de données captés provenant d'un dispositif émetteur spécifique, sont disposées selon un agencement dans le temps déterminé en fonction de la position théorique connue de chaque impulsion de signaux codés à trajet direct. La largeur de chaque fenêtre T_{w} est adaptée de telle manière à pouvoir détecter les impulsions de plusieurs signaux codés à trajets direct et multiples portant la même information, ce qui est un avantage de la présente invention.

Chaque fenêtre temporelle peut être de largeur comprise entre 20 et 50 ns par exemple, et débute avant l'apparition de chaque impulsion des signaux à trajet direct. Cependant cette largeur peut être plus petite tout en permettant de capter au moins un des signaux à trajets multiples en plus des signaux à trajet direct, ou également plus grande par exemple de l'ordre 100 ns dans le cas d'un positionnement.

Dans un système de communication de données de positionnement ou de texte ou de synchronisation, il est généralement nécessaire que la largeur des fenêtres temporelles soit plus grande durant la recherche de synchronisation , temporelle. Ceci permet de détecter des signaux à trajets direct et/ou multiples qui peuvent être potentiellement reçus avec beaucoup de retard ou d'avance sur la position théorique recherchée.

Lorsque la synchronisation temporelle est trouvée et que la fréquence des signaux d'horloge des dispositifs émetteur et récepteur est bien ajustée, chaque impulsion d'une séquence de données est bien située dans chaque fenêtre temporelle. De ce fait, quand toutes les fenêtres temporelles FEN₁ à FEN_{N} sont additionnées par au moins un additionneur 51, toutes les impulsions des séquences de tous les signaux captés par le dispositif récepteur sont additionnées de manière cohérente pour maximiser le niveau d'amplitude des impulsions par rapport au niveau du bruit. Comme la polarité en tension des signaux de bruit dans l'intervalle temporel de chaque fenêtre n'est pas définie précisément, au contraire de la polarité en tension des impulsions des signaux de données, le niveau d'amplitude du bruit après l'opération d'addition est plus faible que le niveau d'amplitude des impulsions.

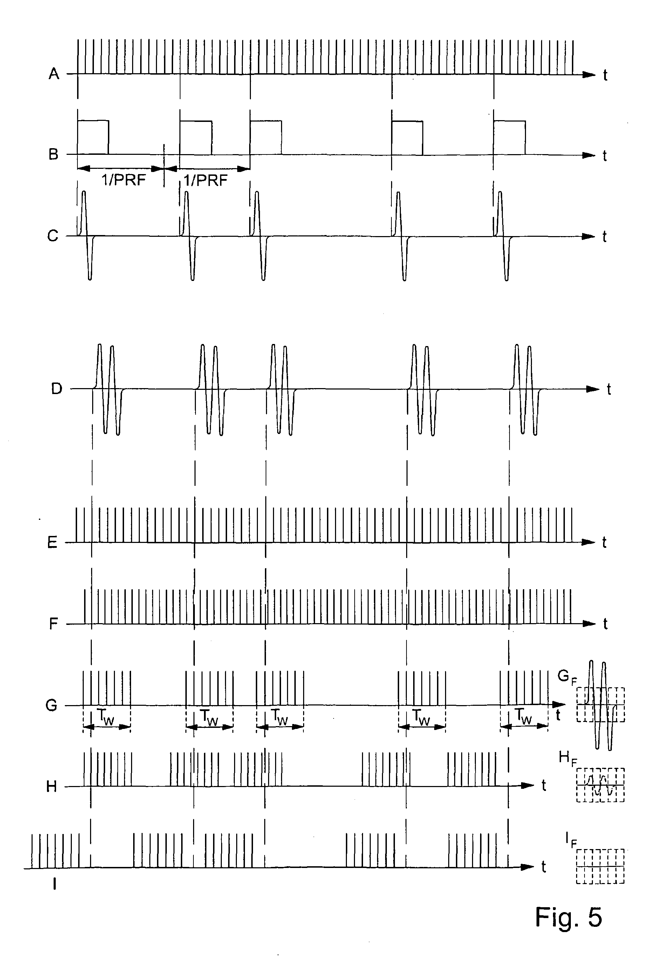

Comme pour obtenir une addition cohérente des impulsions de chaque fenêtre, il est nécessaire d'avoir une bonne synchronisation entre le dispositif émetteur et le dispositif récepteur. Pour ce faire avant de transmettre différents caractères ou symboles dans les signaux de données, il peut être souhaité de transmettre au début une trame de synchronisation comme montré symboliquement à la figure 4. Cette trame de synchronisation est composée d'une ou plusieurs séquences successives à N impulsions. Ceci permet de laisser le temps au dispositif récepteur d'ajuster l'emplacement des fenêtres en fonction de la position de chaque impulsion des séquences. De plus, cela permet de laisser le temps de synchroniser la fréquence du second étage oscillateur 31 avec le premier étage oscillateur 21, ou de synchroniser la fréquence de ré-échantillonnage de l'unité des moyens d'addition de fenêtres numériques 41.

Pour comprendre l'importance d'avoir une bonne synchronisation entre le dispositif émetteur et le dispositif récepteur de manière à pouvoir démoduler les données de signaux codés reçus, on peut se reporter à différents signaux présentés à la figure 5. Les signaux A à C sont des signaux du dispositif émetteur, alors que les signaux D à I sont des signaux du dispositif récepteur. Dans cette figure 5, le nombre N d'impulsions est choisi égal à 5 ce qui correspond à un gain de traitement PG (processing gain en terminologie anglaise) de l'ordre de 7 dB après l'opération d'addition des fenêtres temporelles dans le dispositif récepteur.

Ce gain de traitement peut être calculé à l'aide de la formule PG = 10·log N [dB], ce qui fait que si un gain plus important est souhaité, il est nécessaire que chaque séquence, qui définit un ou plusieurs caractères, comprennent un nombre N important d'impulsions. Bien entendu avec un nombre plus important d'impulsions par séquence, un ralentissement de démodulation des données est inévitable, mais peut être toléré selon le type de données à transmettre. Par exemple, avec un nombre N égal à 200, le gain de traitement serait de l'ordre de 23 dB, et avec un nombre N égal à 1024, le gain de traitement serait de l'ordre de 30 dB.

Les signaux A correspondent à des signaux d'horloge de référence à fréquence f₀ qui sont utilisés pour cadencer la modulation des données dans l'unité de traitement du dispositif émetteur.

Les signaux B sont des signaux sortant de l'unité de traitement du dispositif émetteur qui comprennent une impulsion rectangulaire par période de répétition 1/PRF. Ces signaux B sont des signaux de déclenchement de l'unité de mise en forme des impulsions du dispositif émetteur.

Les signaux C correspondent aux signaux codés de données transmis par l'antenne à large bande du dispositif émetteur. Les données dans ces signaux codés sont définis par des impulsions à double alternance de largeur inférieure à 1 ns.

Les signaux D correspondent aux signaux captés par l'antenne à large bande du dispositif récepteur. On remarque que ces signaux peuvent contenir des impulsions à trajets direct et/ou multiples, qui peuvent avoir une forme différente des impulsions transmises après l'antenne à large bande du dispositif récepteur. En pratique, une dérivée des impulsions des signaux codés peut être observée.

Les signaux E correspondent à des signaux de cadencement pour l'échantillonnage des signaux analogiques dans l'étage de conversion analogique-numérique du dispositif récepteur. La fréquence d'échantillonnage fₛ des signaux E est identique à la fréquence f₀ des signaux d'horloge de référence du dispositif émetteur.

Les signaux F correspondent à des signaux de cadencement pour l'échantillonnage des signaux analogiques dans l'étage de conversion analogique-numérique du dispositif récepteur, dont la fréquence d'échantillonnage fₛ a un écart df de fréquence par rapport à la fréquence f₀. Cette fréquence doit être ajustée dans le dispositif récepteur lors de la phase de recherche à deux dimensions en temps et en fréquence.

Les signaux G correspondent à des fenêtres temporelles d'échantillons de parties sélectionnées des signaux de données où le temps entre chaque début de fenêtre correspond exactement au temps entre chaque impulsion de la séquence de données. La fréquence fₛ d'échantillonnage est ajustée à la fréquence fo des signaux d'horloge de référence comme montrée par les signaux E. En additionnant les impulsions de manière cohérente de chacune de ces fenêtres de largeur Tw dans le dispositif récepteur, on remarque que le niveau d'amplitude des impulsions devient supérieur au niveau du bruit dans la fenêtre finale G_{F}.

Il est à noter que chaque fenêtre temporelle de réception d'une partie des signaux codés de données peut être obtenue, dans l'unité de traitement des signaux du dispositif récepteur, par une opération de multiplication par 1 des parties à sélectionner des signaux codés et par 0 des parties à supprimer.

Les signaux H correspondent à des fenêtres temporelles d'échantillons de parties sélectionnées des signaux de données où un écart de fréquence d'horloge est constaté entre le dispositif émetteur et le dispositif récepteur en utilisant des signaux d'échantillonnage, tels que les signaux F. Dans ce cas, l'addition des impulsions de chaque fenêtre ne permet juste pas d'obtenir un niveau d'amplitude des impulsions additionnées supérieures au niveau du bruit dans la fenêtre finale H_{F}.

Les signaux I correspondent à des fenêtres temporelles d'échantillons de parties sélectionnées des signaux de données où le temps entre chaque début de fenêtre correspond exactement au temps entre chaque impulsion de la séquence de données, mais sans synchronisation temporelle entre le dispositif émetteur et le dispositif récepteur. La fréquence fₛ d'échantillonnage est pourtant bien ajustée à la fréquence f₀ des signaux d'horloge de référence comme montrée par les signaux E. Cependant, le début des N fenêtres est temporellement décalée, ce qui a pour conséquence qu'aucune impulsion de séquence n'est captée par le dispositif récepteur et donne une addition de fenêtres sans aucune impulsion comme montré dans la fenêtre finale I_{F}.

Comme le dispositif récepteur connaît l'agencement des séquences d'impulsions à capter, une première étape consiste à trouver le début.de chaque séquence d'impulsions soit en se décalant dans le temps de façon sérielle ou en cherchant en parallèle à plusieurs temps différents. Pour le cas où la fréquence d'échantillonnage n'est pas suffisamment proche par rapport à la fréquence des signaux d'horloge de référence du dispositif émetteur, cette recherche peut être répétée soit en série, soit en parallèle avec différentes fréquences d'échantillonnage.

Une fois que la synchronisation temporelle a été trouvée, la fréquence d'échantillonnage ou de ré-échantillonnage peut être adaptée à la fréquence des signaux d'horloge de référence du dispositif émetteur par contrôle du niveau d'amplitude des impulsions dans la fenêtre finale jusqu'à maximiser ce niveau d'amplitude par rapport au niveau du bruit.

A tout moment, la fréquence d'échantillonnage ou de ré-échantillonnage peut être adaptée par contrôle d'une éventuelle diminution du niveau d'amplitude des impulsions dans la fenêtre temporelle finale ou par déplacement progressif des impulsions dans cette fenêtre finale. Le déplacement des impulsions additionnées dans le fenêtre temporelle finale peut être dû à un effet Doppler si le dispositif émetteur s'éloigne ou s'approche du dispositif récepteur.

Dans le cas où l'addition des fenêtres temporelles est réalisée analogiquement comme décrit ci-devant et illustré en figure 1b, on entendra par fréquence d'échantillonnage, la fréquence CLKᵣ, qui contrôlera l'addition des fenêtres analogiques.

Aux figures 6a et 6b, une forme d'exécution de l'étage de conversion analogique-numérique du dispositif récepteur est présentée, ainsi que des signaux de cadencement de convertisseurs de l'étage.

L'étage de conversion analogique-numérique comprend un nombre n de convertisseurs AN 53 à 55 travaillant en parallèle. Chaque convertisseur 53 à 55 est cadencé par un signal de cadencement CLK₁, CLK₂ à CLKₙ de fréquence identique à la fréquence des signaux d'horloge CLKᵣ produits par l'étage oscillateur. Chaque signal de cadencement CLK₁, CLK₂ à CLKₙ est décalé en phase de 360°/n pour chaque convertisseur 53 à 55. De ce fait, les n signaux de cadencement décalés en phase permettent de réaliser un échantillonnage des signaux analogiques intermédiaires S_{INT} à une fréquence effective fₑ correspondant à n fois la fréquence des signaux d'horloge CLKᵣ.

Comme l'échantillonnage des signaux intermédiaires est généralement réalisé à une fréquence correspondant à 2 fois la largeur de bande des signaux codés de données, par exemple à une fréquence pouvant être égale ou supérieure à 2 GHz, il peut être envisagé d'avoir 4 convertisseurs cadencés par 4 signaux de cadencement décalés en phase l'un de l'autre de 90° comme illustré à la figure 6b. La fréquence des signaux d'horloge CLKᵣ doit donc être 4 fois moins importante que la fréquence effective d'échantillonnage fₑ.

A chaque flanc montant du signal de cadencement, chaque convertisseur 53 à 55 fournit des signaux binaires à m bits S_{D1} à S_{Dn}, où m peut prendre une valeur de 1 à 8. Ces signaux binaires S_{D1} à S_{Dn} sont fournis à des moyens de combinaison du type à entrée série et sortie parallèle 56, qui sont chargés de combiner tous les signaux reçus des convertisseurs afin de fournir des signaux numériques S_{NUM} pour l'unité de traitement des signaux du dispositif récepteur.

Dans les figures 7 à 9, des graphiques des signaux d'une fenêtre temporelle sont présentés pour l'estimation du niveau du bruit, le calcul de l'enveloppe des signaux d'une fenêtre et l'estimation du temps d'arrivée des signaux de données. Ces opérations sont réalisées dans les moyens d'estimation du temps d'arrivée 44 de l'unité de traitement des signaux 33, représentés aux figures 1a et 1b, sous la commande de signaux de commande CE produits par les moyens de commande 43.

Tout d'abord en référence à la figure 7, une méthode d'estimation du niveau du bruit A_{N} est présentée à l'aide d'un graphique des signaux d'une fenêtre temporelle. Cette méthode est basée sur le fait qu'à l'intérieur de l'intervalle d'observation de la fenêtre temporelle, il y a au moins une portion temporelle de la fenêtre de longueur T_{N} pendant laquelle il n'y a pas d'énergie propre aux impulsions des séquences de données transmises. Le niveau du bruit A_{N} estimé est plus faible que le niveau d'amplitude maximal Aₚ des impulsions additionnées de manière cohérente.

Pour estimer ce niveau de bruit A_{N}, plusieurs valeurs d'amplitude maximale Aᵢ en valeur absolue sont calculées de signaux sᵢ(t), pour i allant de 0 à I, dans des sous-fenêtres temporelles de longueur T_{N}. Les I+1 sous-fenêtres temporelles pour le calcul des valeurs d'amplitude sont décalées temporellement l'une de l'autre d'un intervalle de temps déterminé de l'origine de la fenêtre temporelle d'observation à l'extrémité de cette fenêtre temporelle. Pour I+1 amplitudes à calculer, le nombre d'intervalles de temps est de I.

La valeur du niveau d'amplitude du bruit en valeur absolue A_{N} est égale à la valeur d'amplitude minimale parmi les Aᵢ calculées, ou à la valeur minimale des maxima de tous les signaux sᵢ(t).

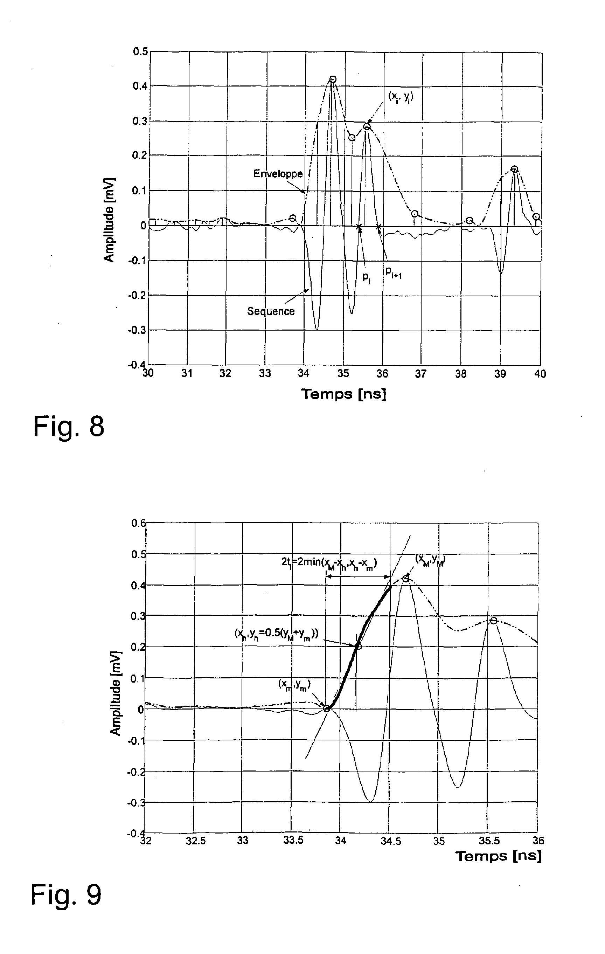

A la figure 8, une méthode de calcul de l'enveloppe positive des signaux numérisés de la fenêtre temporelle est présentée sur une partie de ladite fenêtre temporelle.

Selon cette méthode, il est tout d'abord déterminé toutes les positions pᵢ du passage par zéro des signaux de la fenêtre temporelle, c'est-à-dire toutes les positions où l'échantillon avant et après pᵢ a un signe opposé. Après cette étape, il est déterminé les coordonnées (xᵢ,yᵢ) du maximum d'amplitude en valeur absolue dans chaque intervalle de pᵢ à pᵢ₊₁, pour i allant de 1 à I-1. Ensuite de quoi, il est calculé l'enveloppe en utilisant un algorithme d'interpolation qui peut être par exemple l'algorithme dénommé interpolation par des polynômes de Hermite du troisième ordre par morceaux (piecewise cubic Hermite interpolation en terminologie anglaise).

Finalement en référence à la figure 9, il est présenté une méthode d'estimation du temps d'arrivée des premiers signaux de données reçus par le dispositif récepteur. Ces premiers signaux peuvent être des signaux à trajet direct ou des signaux à trajets multiples en l'absence de trajet direct.

Pour cette estimation, il est tout d'abord calculé un seuil d'amplitude th qui est basé sur le pic d'amplitude A_{P} de l'enveloppe, ainsi que sur l'estimation du niveau d'amplitude du bruit A_{N} décrit en référence à la figure 7. Ce seuil th peut être calculé par la formule suivante : th= 5.A_{N} + A_{P}/25.

Par la suite, une estimation du flanc montant de l'enveloppe où le seuil th est dépassé pour la première fois est effectué en sélectionnant un segment de l'enveloppe montré en gras sur la figure 9. Une approximation de ce segment avec une fonction donnée est effectuée afin de pouvoir être utilisée pour estimer ce flanc montant de l'enveloppe. Pour ce faire, il est tout d'abord estimé le point maximum local de l'enveloppe aux coordonnées (x_{M}, y_{M}) qui suivent directement le point où l'enveloppe passe au-dessus du seuil th. Il est également estimé le point minimum local de l'enveloppe aux coordonnées (xₘ, yₘ) qui précèdent le point où l'enveloppe passe au-dessus du seuil th.

Après l'établissement des ces coordonnées, il est effectué le calcul de la valeur yₕ qui est égal à 0.5(y_{M} + yₘ), ce qui permet de trouver la coordonnée correspondante xₕ. On doit par la suite sélectionner une valeur de temps t₁ ≤ min(x_{M}-Xₕ, Xₕ - Xm).

Après avoir sélectionné la valeur de temps t₁, une sélection d'une séquence des échantillons de l'enveloppe de longueur 2·t₁ centrée à la coordonnée xₕ est réalisée. Finalement, une approximation du segment sélectionné d'échantillons de l'enveloppe avec une fonction donnée est effectuée dans un sens des moindres carrés. Cette fonction peut être du type affine, ce qui permet d'estimer le flanc montant de l'enveloppe basée sur cette fonction. Au point y=0 de cette fonction affine, le temps d'arrivée des premiers signaux peut ainsi être déterminé.

A partir de la description qui vient d'être faite de multiples variantes de réalisation du procédé de communication de données par des signaux à impulsions peuvent être conçues par l'homme du métier sans sortir du cadre de l'invention définie par les revendications. Le dispositif récepteur peut ne pas comprendre d'amplificateur à faible bruit à filtre intégré, car l'antenne à large bande du dispositif récepteur peut déjà remplir les fonctions de filtrage. Le dispositif récepteur peut être agencé pour servir de dispositif émetteur, et le dispositif émetteur peut être agencé pour servir de dispositif récepteur pour pouvoir opérer un échange de données.

## Revendications

1. Procédé de communication de données sans fil entre un dispositif émetteur (2) ayant une première antenne à large bande (27) pour l'émission de signaux codés de données à ultra-large bande (S_{D}), et un dispositif récepteur (3) ayant une seconde antenne à large bande (37) pour la réception des signaux codés de données à trajets direct et/ou multiples, les données transmises étant définies par une ou plusieurs séquences de N impulsions où N est un nombre entier supérieur à 1, l'agencement des N impulsions de chaque séquence représentant un codage des données relatif au dispositif émetteur, **caractérisé en ce que** les N impulsions d'une séquence d'impulsions des signaux codés de données à trajets direct et/ou multiples reçus par le dispositif récepteur sont traitées chacune dans une parmi N fenêtres temporelles correspondantes de réception, chacune des N fenêtres temporelles de réception étant positionnée dans le temps en fonction d'un agencement théorique connu des N impulsions des signaux transmis par le dispositif émetteur, et **en ce qu'**une opération d'addition (51) des N fenêtres est réalisée dans le dispositif récepteur pour que le niveau d'amplitude des impulsions additionnées soit supérieur au niveau d'amplitude du bruit capté par le dispositif récepteur.

2. Procédé de communication selon la revendication 1, **caractérisé en ce que** le dispositif émetteur (2) transmet des signaux codés de données (S_{D}), dans lesquels les données sont codées par une modulation temporelle des impulsions de chaque séquence.

3. Procédé de communication selon la revendication 1, **caractérisé en ce que** le dispositif émetteur (2) transmet des signaux codés de données (S_{D}), dans lesquels les données sont codées par une modulation de polarité ou de phase des impulsions de chaque séquence.

4. Procédé de communication selon la revendication 1, **caractérisé en ce que** le dispositif émetteur (2) transmet des signaux codés de données (S_{D}), dans lesquels les données sont codées par une modulation temporelle et de polarité des impulsions de chaque séquence.

5. Procédé de communication selon la revendication 1, **caractérisé en ce que** les signaux codés de données (S_{D}) comprennent une trame de synchronisation pour permettre au dispositif récepteur de reconnaître le dispositif émetteur et de se synchroniser sur cette trame avant de démoduler les données reçues, cette trame de synchronisation étant composée d'une ou plusieurs séquences de N impulsions de période de répétition déterminée.

6. Procédé de communication selon la revendication 1, **caractérisé en ce que** la largeur identique de chacune des N fenêtres temporelles est plus petite que l'inverse de la fréquence de répétition des impulsions d'une séquence de signaux codés de données à transmettre, et **en ce que** cette largeur de fenêtre temporelle est adaptée pour recevoir les impulsions des signaux à trajet direct et multiples captés par le dispositif récepteur, par exemple de largeur supérieure à 20 ns.

7. Procédé de communication selon la revendication 1, pour lequel le dispositif émetteur (2) comprend un premier étage oscillateur (21) délivrant au moins un premier signal d'horloge à une première fréquence définie (CLKₑ), une première unité de traitement des signaux (23) cadencée par le signal d'horloge fourni par le premier étage oscillateur afin de réaliser une modulation des données à transmettre, et une unité de mise en forme des N impulsions (24) de chaque séquence à transmettre par la première antenne à large bande (27) du dispositif émetteur en fonction de la modulation des données fournie par la première unité de traitement des signaux, et pour lequel le dispositif récepteur (3) comprend un second étage oscillateur (31) délivrant au moins un second signal d'horloge à une seconde fréquence définie (CLKᵣ), une seconde unité de traitement des signaux (33) reliée au second étage oscillateur, et un étage de conversion analogique-numérique (34) des signaux codés de données reçus par la seconde antenne à large bande, **caractérisé en ce que** les impulsions des signaux codés de données reçus sont échantillonnés dans l'étage de conversion analogique-numérique dans chacune des N fenêtres temporelles par au moins un signal d'échantillonnage (CLK₁₋ₙ) fourni par la seconde unité de traitement des signaux, le signal d'échantillonnage ayant une fréquence proportionnelle à la seconde fréquence du second signal d'horloge, et **en ce que** l'opération d'addition des impulsions captées échantillonnées dans chaque fenêtre temporelle est effectuée dans la seconde unité de traitement des signaux.

8. Procédé de communication selon la revendication 7, **caractérisé en ce que** les signaux des fenêtres temporelles sont additionnés successivement et mémorisés dans au moins un registre de la seconde unité de traitement des signaux.

9. Procédé de communication selon la revendication 7, **caractérisé en ce que** la seconde fréquence du second signal d'horloge est ajustée proportionnellement à la première fréquence du premier signal d'horloge par la seconde unité de traitement pour obtenir une amplitude maximale des impulsions de chaque fenêtre temporelle, qui sont additionnées de manière cohérente.

10. Procédé de communication selon la revendication 9, **caractérisé en ce que** chaque fenêtre de réception positionnée dans le temps par rapport à l'emplacement théorique connu de chaque impulsion des signaux de données reçus est centrée par rapport à une valeur théorique de référence ou par rapport à l'amplitude maximale des impulsions additionnées des signaux à trajets direct et/ou multiples captés par le dispositif récepteur.

11. Procédé de communication selon l'une des revendications 3 et 4, **caractérisé en ce qu'**une corrélation avec des signaux de référence de polarité identique à la polarité des signaux codés reçus par le dispositif récepteur est effectuée avant l'opération d'addition des impulsions résultantes de chaque fenêtre temporelle.

12. Procédé de communication selon la revendication 7, dans lequel la seconde unité de traitement des signaux (33) comprend des moyens d'addition des fenêtres numériques (41) et des moyens d'estimation du temps d'arrivée (44) des signaux codés de données, **caractérisé en ce qu'**après ou avant l'opération d'addition des fenêtres temporelles, le procédé comprend des étapes consistant à calculer plusieurs valeurs d'amplitude maximale (Aᵢ) en valeur absolue de signaux dans des sous-fenêtres temporelles de longueur T_{N} définie, chacune des sous-fenêtres étant décalée temporellement l'une de l'autre d'un intervalle de temps déterminé de l'origine de la fenêtre temporelle de réception à l'extrémité de cette fenêtre temporelle, et à estimer un niveau d'amplitude du bruit en sélectionnant la valeur d'amplitude minimale de toutes les valeurs d'amplitudes calculées.

13. Procédé de communication selon la revendication 7, **caractérisé en ce qu'**il comprend des étapes pour le calcul d'une enveloppe positive des signaux d'une fenêtre temporelle consistant à déterminer toutes les positions pᵢ du passage par zéro des signaux de la fenêtre temporelle, à déterminer les coordonnées (xᵢ,yᵢ) du maximum d'amplitude en valeur absolue dans chaque intervalle de pᵢ à pᵢ₊₁, pour i allant de 1 à I-1, I étant un nombre entier supérieur à 3, et à calculer l'enveloppe en utilisant un algorithme d'interpolation spécifique en passant par les coordonnées déterminées.

14. Procédé de communication selon la revendication 13, **caractérisé en ce qu'**il comprend des étapes pour le calcul du temps d'arrivée des premiers signaux captés par le dispositif récepteur consistant à calculer un seuil d'amplitude th basé sur un maximum d'amplitude (A_{P}) de l'enveloppe, et un niveau d'amplitude estimé du bruit (A_{N}), à effectuer une estimation du flanc montant de l'enveloppe positive où le seuil th est dépassé pour la première fois, à estimer le point maximum local de l'enveloppe aux coordonnées (x_{M}, y_{M}) qui suivent directement le point où l'enveloppe passe au-dessus du seuil th, et le point minimum local de l'enveloppe aux coordonnées (xₘ, yₘ) qui précèdent le point où l'enveloppe passe au-dessus du seuil th, à calculer des coordonnées intermédiaires entre le point minimum et le point maximum, à effectuer à l'endroit des coordonnées intermédiaires une approximation d'un segment sélectionné d'échantillons de l'enveloppe avec une fonction donnée, telle qu'une fonction affine, et à déterminer le temps d'arrivée des premiers signaux captés par le dispositif récepteur au passage par zéro ou une autre valeur de la fonction déterminée.

15. Procédé de communication selon la revendication 12, dans lequel la seconde unité de traitement des signaux comprend des moyens de commande pour fournir des signaux de commande (C_{FN}) aux moyens d'addition de fenêtres numériques (41) afin de modifier l'échelle de temps ou de fréquence de répétition des N fenêtres à additionner, **caractérisé en ce qu'**une opération de ré-échantillonnage est effectuée dans la seconde unité de traitement des signaux (33) du dispositif récepteur (3) avec une fréquence de ré-échantillonnage, qui est générée par les moyens de commande (43), plus élevée que la fréquence d'échantillonnage de l'étage de conversion analogique-numérique (34).

16. Dispositif récepteur (3) pour la mise en oeuvre du procédé de communication selon l'une des revendications précédentes, comprenant un étage oscillateur (31) délivrant au moins un signal d'horloge à une fréquence définie (CLKᵣ), une unité de traitement des signaux (33) reliée à l'étage oscillateur, et un étage de conversion analogique-numérique (34) des signaux codés de données reçus par une antenne à large bande (37), **caractérisé en ce que** l'unité de traitement des signaux comprend des moyens d'addition de fenêtres temporelles (41, 45) pour réaliser une addition cohérente des impulsions de chacune des N fenêtres temporelles.

17. Dispositif récepteur (3) selon la revendication 16, **caractérisé en ce que** les moyens d'addition de fenêtres temporelles (41) reçoivent des signaux numériques (S_{NUM}) de l'étage de conversion analogique-numérique pour réaliser une addition de fenêtres numériques.

18. Dispositif récepteur (3) selon la revendication 16, **caractérisé en ce que** les moyens d'addition de fenêtres temporelles (45) reçoivent des signaux analogiques de données de la seconde antenne à large bande (37) pour réaliser une addition de fenêtres analogiques.
